# FASCICULE DE BREVET EUROPEEN

(11) **EP 0 760 768 B1**
(45) Date de publication et mention de la délivrance du brevet: **27.01.1999**
(21) Numéro de dépôt: 95918651.1
(22) Date de dépôt: 27.04.1995
(51) Int. Cl.: B62D 1/26, B61B 13/12

(54) **SYSTEME DE TRANSPORT PAR VEHICULES PASSIFS**
TRANSPORTSYSTEM MIT PASSIVEN FAHRZEUGEN
PASSIVE VEHICLE TRANSPORT SYSTEM

(30) Priorité: 29.04.1994 FR 9405273
(43) Date de publication de la demande: 12.03.1997
(73) Titulaire: Treviso, Marc, 51100 Reims (FR); Mourer, Jean-Claude, 51100 Reims (FR); Saillant, Yves Claude Daniel, 51500 Champfleury (FR)
(72) Inventeur: SAILLANT, Yves, Claude, Daniel, F-51500 Champfleury (FR)
(74) Mandataire: Thinat, Michel
(86) Numéro de dépôt international: FR9500554
(87) Numéro de publication internationale: WO9529834

(56) Documents cités:
- CH-A- 667 241
- FR-A- 2 036 543
- FR-A- 2 126 797
- FR-A- 2 599 694
- FR-A- 2 690 120
- GB-A- 1 095 414
- US-A- 3 077 165
- US-A- 3 356 040
- US-A- 4 593 623

## Description

L'invention concerne un système de transport par véhicules passifs, du type décrit dans le préambule de la revendication 1.

Un système de ce type est connu par le brevet US n° 3 356 040. Or, ce système de transport présente l'inconvénient majeur de nécessiter une infrastructure en surface relativement complexe et coûteuse et un équipement sur les véhicules destiné à coopérer avec cette infrastructure, d'une complexité correspondante.

La présente invention a pour but de proposer un système de transport du type indiqué plus haut, qui pallie les inconvénients de l'état de la technique.

Pour atteindre ce but, le système de transfert selon l'invention comprend les caractéristiques indiquées dans la partie caractérisante de la revendication 1.

D'autres caractéristiques sont énoncées dans des revendications dépendantes.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 est une vue en perspective du système de transport par véhicules passifs selon la présente invention.
La figure 2 est une vue frontale simplifiée de la partie inférieure d'un véhicule selon la présente invention.
La figure 3 est une vue en coupe, avec arrachement et à plus grande échelle du détail indiqué en III sur la figure 1.

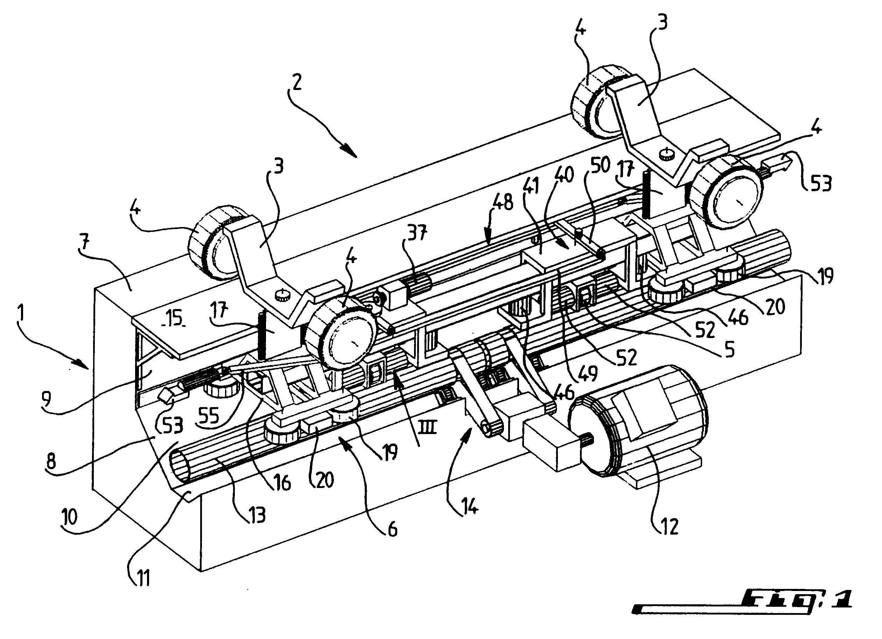

La figure 1 montre une partie d'une voie 1 sur laquelle se déplace un véhicule 2 notamment pour le transport de passagers, dont seulement les deux bogies 3 porteurs de deux roues 4 et la partie inférieure comportant deux dispositifs moteurs de propulsion 5 et deux dispositifs de guidage 6 chacun associé à un bogie sont représentés.

La voie 1 comprend une tranchée 8 qui comporte deux surfaces latérales parallèles 9, situées en regard et s'étendant sensiblement parallèlement à l'axe de la voie, symétriquement par rapport au plan vertical médian longitudinal de cette dernière. Chacune des deux faces est adaptée pour constituer une face de guidage des véhicules circulant sur la voie. La partie inférieure de la tranchée comprend deux faces inclinées 10 en forme de branches d'un V qui joignent en haut une des faces latérales verticales 9 et en bas le fond horizontal 11 de la tranchée. La tranchée est recouverte au niveau du sol par deux platelages 15 laissant subsister entre eux une fente s'étendant dans l'axe de la tranchée. Les roues 4 se déplacent sur des pistes de roulement 7 prévues sur le sol de part et d'autre de la tranchée.

Dans l'axe de cette dernière, à une certaine distance du fond 11 et des parois inclinées 10 est disposée une suite de tubes tournants 13 qui sont axialement alignés. Les tubes sont montés sur des paliers coniques, en bout, de manière à assurer leur maintien dans tous les axes. Sur l'ensemble de la voie ils sont posés sur des roulements disposés à intervalle régulier de par exemple 4 mètres. A titre d'exemple, les tubes sont en acier d'un diamètre de 244 mm pour une épaisseur de 6,3 mm. Les tubes sont entraînés, dans un seul sens de rotation, à une vitesse constante de par exemple de l'ordre de 800 tours/minute. La suite des tubes est divisée en tronçons et les moteurs d'entraînement en rotation des tronçons sont de puissances différentes selon la nature et la longueur des tronçons. Par exemple on peut prévoir des moteurs d'accélération et de pentes, capables de mettre en rotation 80 mètres de tube et des moteurs d'entretien de la vitesse constante, capables de mettre en rotation 120 mètres de tube.

La transmission du couple peut être réalisée de toute manière appropriée connue en soi, par exemple à l'aide d'une courroie crantée, engagée avec un moto-réducteur en rapport avec les caractéristiques du moteur. Sur la figure 1, les moteurs d'entraînement en rotation des tronçons de tubes ne sont pas représentés. Par contre on y montre un moteur de secours 12 disposé entre deux tronçons de tubes, de manière à pouvoir assurer la mise en rotation de l'un ou l'autre troncon contigu. En 14 on a indiqué le dispositif de transmission du couple, qui est du type à courroie crantée.

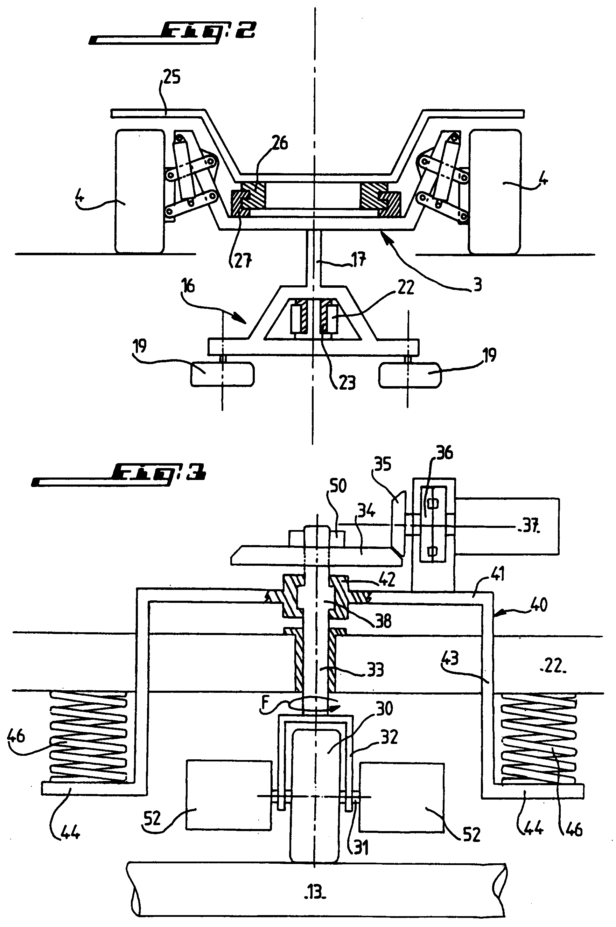

Concernant la structure des véhicules, chaque dispositif de guidage 6 est réalisé sous forme d'une plate-forme 16 montée fixe sous un bogie 3 par l'intermédiaire d'une entretoise 17 en forme d'une plaque s'étendant verticalement à travers la fente délimitée entre les deux platelages 15 de recouvrement de la tranchée 8. La plate-forme se trouvant ainsi à l'intérieur de la tranchée comporte deux paires de galets de guidage 19 à axes de rotation verticaux, chaque paire étant disposée de façon à être en appui contre une des surfaces de guidage verticale 9 de la voie. Entre les deux galets 19 de chaque paire est disposé un frein d'urgence indiqué en 20. Les deux bogies 3 du véhicule sont reliés par une poutre longitudinale 22 qui est articulée à chacune de ses extrémités en 23 sur une plate-forme 16. La poutre s'étend ainsi axialement dans la tranchée 8, comme cela est montré sur la figure 2. Cette même figure montre encore que le châssis du véhicule identifié par 25 est monté rotatif autour d'un axe vertical sur chaque bogie 3, à l'aide de deux couronnes 26, 27 respectivement solidaires du châssis et du bogie.

Comme on le voit clairement sur les figures 1 et 3, la poutre de liaison 22 porte les deux dispositifs propulseurs 5, chacun disposé à proximité d'un bogie dans l'espace axial entre ceux-ci.

Chaque dispositif de propulsion 5 comprend un galet moteur propulseur par contact à friction 30 dont l'axe 31 est logé dans un support en forme d'une chape 32 en forme d'un U orienté verticalement et à la base duquel est fixé une tige 33 qui est solidaire en rotation à son extrémité libre à un pignon 34 engrenant d'un pignon de renvoi 35 à axe horizontal monté solidaire en rotation par l'intermédiaire d'un dispositif de débrayage 36 de l'arbre de sortie d'un moteur électrique 37 réalisé sous forme d'un moteur pas-à-pas. La tige 33 est montée rotative et retenue axialement à l'aide d'un collet 38 dans un support 40 monté verticalement déplaçable sur la poutre 22.

Le support 40 comporte une plate-forme supérieure horizontale 41 dont la zone centrale est configurée en partie de logement 42 du collet 38 de la tige 33. La plate-forme de forme rectangulaire 41 porte au niveau de chacun de ses angles une entretoise verticale 43. Grâce à ses entretoises le support 40 est monté à cheval sur la poutre 22, de façon à interdire au support tout autre mouvement que vertical. Le montage du support sur la poutre assure un effet de guidage latéral du support. Les extrémités des deux entretoises situées à chaque extrémité longitudinale du support 40 portent une plate-forme horizontale 44 qui s'étend vers l'extérieur du support 40 dans l'axe du véhicule. Entre chaque plate-forme 44 et la poutre de liaison 22 est placé un ressort hélicoïdal 46 dont l'axe s'étend verticalement. Ce ressort a pour but de pousser le galet propulseur 30 contre la surface périphérique extérieure du tube tournant moteur 13, comme on le voit clairement sur la figure 3.

Etant donné que le moteur pas à pas est monté sur la plate-forme supérieure 41 du support 40 et que la tige 33 de support du galet 30 traverse la poutre 22 de façon librement rotative, toute rotation de l'arbre de sortie du moteur pas-à-pas 37 occasionne un pivotement en direction de la flèche F du galet et ainsi une variation de l'orientation de l'axe de rotation 31 du galet par rapport à l'axe du tube. Etant donné que le galet est poussé par les ressorts 46 contre le tube 13, la rotation de ce dernier est transmise par friction au galet qui occasionne alors le déplacement du véhicule à une vitesse qui dépend de l'orientation du galet par rapport au tube.

Lorsque l'axe du tube 13 et l'axe 31 du galet sont parallèles, le tube et le galet tournent, mais ne produisent aucune réaction génératrice de mouvement. Dès qu'une autre orientation est donnée, la résistance induite par frottement provoque une force qui propulse le véhicule. L'optimum de la conversion est atteint lorsque l'angle considéré est de 45° à 60°. Ainsi les variations de vitesses nécessaires à l'accélération, au ralentissement et au freinage du véhicule sont obtenues par un changement approprié de l'angle formé entre les axes des galets et le tube, provoqué par actionnement du moteur pas à pas 37.

Comme on le voit sur la figure 1, un seul moteur pas à pas 37 suffit pour assurer l'orientation synchrone des deux galets moteurs 30. Cet effet est obtenu grâce à une liaison entre les tiges 33, dans l'exemple représenté réalisée sous forme d'un parallélogramme 48 comportant deux tringles 49 qui sont parallèles à l'axe du véhicule et reliées par deux tringles de liaison 50 dont chacune est fixée de façon solidaire en rotation, dans sa partie centrale, à la tige 33 d'orientation d'un galet 30, de la manière illustrée sur la figure 3. Ainsi le mouvement de rotation imparti à la tige 31 de l'un des galets est transmis à la tige de l'autre.

Concernant la structure du véhicule, il est encore à noter que des dynamos 52 sont montées sur les axes 31 des galets 30, qui font partie d'un dispositif autonome d'alimentation en énergie électrique du véhicule.

Pour compléter la description, on notera encore qu'à chaque extrémité du véhicule est prévu un dispositif de raccordement 53 à un autre véhicule qui est articulé à une extrémité d'une tige 55 dont l'autre extrémité est articulée à un angle du parallélogramme 49.

La commande des véhicules selon l'invention se fait de façon entièrement automatique. A cette fin le système selon l'invention comprend un poste central de commande (non représenté), qui gère l'ensemble des véhicules. Pour que ce poste puisse accomplir cette tâche, la voie est cantonnée en secteurs dont chacun est équipé d'une boucle émettrice-réceptrice de contrôle et de régulation. Chaque véhicule est équipé d'un dispositif émetteur-récepteur qui lui permet de dialoguer avec le poste central, par l'intermédiaire d'une boucle de contrôle et de régulation. Au passage d'une telle boucle de secteur, le véhicule transmet au poste central un message d'identification et les paramètres d'état des différents composants de l'équipement du véhicule. En retour le véhicule reçoit la consigne de vitesse pour le secteur suivant. La valeur de consigne est accompagnée d'une variable indiquant le type de courbes de variation d'accélération à respecter, défini par le programme de gestion du parcours. Deux courbes de variation sont mémorisées pour chaque secteur, à savoir la courbe d'accélération et de décélération standard, notamment en fonction de la topographie ou la géométrique de la voie dans ce secteur et une courbe de décélération d'urgence. Ces courbes sont mémorisées dans une partie du dispositif émetteur-récepteur du véhicule, qui constituent l'interface avec le moteur pas-à-pas. Cette partie est conçue pour surveiller le bon fonctionnement du véhicule et pour détecter toute mauvaise transmission des données.

Les bouches précédant celle qui a donné la consigne de vitesse et est identifiable par le poste central grâce au message d'identification du véhicule, émettent, sur commande du poste central, des informations de variation de par exemple 5 à 0 km/beures pour la première bouche (située par exemple à 40 m), de 30 à 5 km/heures pour la seconde bouche (située à 80 m), de 43 à 30 km/heures pour la troisième bouche (située par exemple à 120 m), et de conserver la vitesse de 43 km/heures pour la quatrième boucle (située à 160 m). Pour améliorer encore la sécurité, on prévoit une boucle de sécurité en amont de la bouche de passage du véhicule. Les bouches qui viennent d'être énoncées seront comptées à partir de cette bouche de sécurité. Etant donné que l'écart normal entre deux véhicules est de 200 mètres dans cet exemple, correspondant à 5 secteurs, les consignes de ralentissement ne produisent leur effet qu'en cas d'un dysfonctionnement. Ainsi les informations émises évoluent de la sorte en fonction de la présence détectée des véhicules, par gestion des quatre bouches situées en amont.

La collecte et la transmission des informations fait appel à des concentrateurs de données répartis le long de la voie. Les communications voie-véhicule sont sécurisées par des protocoles de vérification de transmission des données. L'informatique du poste central centralise les données de cinématique, propres à chaque véhicule. Lors du passage sur une bouche à un temps t, connaissant la vitesse et la distance jusqu'à la bouche suivante, le poste central calcule le temps de parcours tp et établit ainsi la prévision de la présence du véhicule à l'instant t + tp dans la zone de la bouche du secteur suivant.

Lorsque le véhicule passe sur la bouche suivante à l'instant de temps prévu, détectable par l'émission de son message d'identification, le poste central constate la nominalité du parcours de ce véhicule. Si par contre le message d'identification ne parvient pas au poste central à l'instant de temps prévu, celui-ci conclut qu'il y a un dysfonctionnement et met en oeuvre le mode de fonctionnement dégradé qui sera décrit ultérieurement.

Dans ce cas, le véhicule suivant est mis en vitesse lente et s'accouple mécaniquement avec le véhicule en panne.

L'ensemble des deux véhicules se déplace à vitesse réduite jusqu'à la prochaine station où descend l'ensemble des passagers. Les deux véhicules vides sont ensuite acheminés à vitesse normale jusqu'au garage atelier. Le parallélogramme assure le positionnement des galets du véhicule en panne sur la position des galets du véhicule pousseur.

Dans le cas d'une mauvaise transmission ou d'une transmission erronnée des informations en provenance des boucles ou de détection d'une anomalie à bord du véhicule, le véhicule se met en sécurité prévoyant un arrêt d'urgence du véhicule, un débrayage du moteur pas à pas, ce qui met le fonctionnement en mode dégradé.

Il est encore à noter que, pour des raisons de sécurité, les galets propulseurs reviennent en position perpendiculaire aux tubes, automatiquement, dès qu'il n'y a plus d'action du moteur 37 prévu pour impartir l'orientation du galet en fonction des données de consigne données par le système.

Dans la description précédente, la commande a été décrite pour un seul véhicule. Mais plusieurs véhicules peuvent être groupés pour former un ensemble considéré alors comme un seul véhicule par le système.

Bien entendu le système selon l'invention permet formation de réseaux maillés.

## Revendications

1. Système de transport par véhicules passifs, du type dans lequel les véhicules se déplacent à l'aide de roues (4) sur des chemins de roulement (7) d'une voie (1) comportant, à titre de moyens assurant le déplacement du véhicule, une suite de tubes (13) tournants disposés dans la direction longitudinale de la voie (1) et des moyens de guidage des véhicules le long de cette dernière, chaque véhicule (2) comportant au moins un dispositif de propulsion (5) comprenant un galet moteur de propulsion (30) du véhicule, par contact à friction avec la surface périphérique extérieure des tubes tournants (13) et dont l'axe de rotation est orientable par rapport à l'axe des tubes, par pivotement autour d'un axe avantageusement sensiblement vertical, entre une position parallèle aux tubes dans laquelle les galets ne propulsent pas le véhicule, et une position de propulsion maximale et au moins un dispositif de guidage (6) du véhicule adapté pour coopérer avec les moyens de guidage de la voie, caractérisé en ce que les moyens de guidage de la voie (1) sont formés par deux surfaces latérales (9) d'une tranchée (8) recouverte (en 15) au niveau de la voie (1), à l'exception d'une fente, que le dispositif de guidage (6) se trouve à l'intérieur de la tranchée et comporte des roues (19) prenant appui sur les surfaces de guidage (9) et montées sur un support solidaire (16), qu'un véhicule comprend au moins deux bogies porteurs de roues (4) et qu'un dispositif de guidage (6) est associé à chaque bogie (3), que les supports (16) sont articulés à une poutre (22) constituant le support des dispositifs de propulsion (5) et en ce que chaque support (16) des roues de guidage est relié aux bogies par des entretoises (17) passant à travers ladite fente.

2. Système selon la revendication 1, caractérisé en ce que le dispositif d'orientation (5) d'un galet moteur de propulsion (30) est formé par un moteur électrique pas-à-pas (37).

3. Système selon l'une des revendications 1 à 2, caractérisé en ce que chaque galet de propulsion (5) est monté rotatif dans un support (32) portant une tige (33) qui s'étend perpendiculairement à l'axe (31) du galet et est montée rotative dans un support (40) monté sur la poutre de liaison (22) de façon à pouvoir exécuter seulement un mouvement vertical à l'encontre de moyens de rappel (46) adaptés pour pousser le galet en contact avec la surface périphérique des tubes rotatifs (13), la tige (33) étant susceptible d'être entraînée en rotation par le moteur électrique pas-à-pas (37).

4. Système selon la revendication 3, caractérisé en ce que des dynamos (52) sont montées sur l'axe (31) du galet propulseur (30), qui font partie d'un dispositif d'alimentation autonome en énergie électrique du véhicule.

5. Système selon la revendication 3 ou 4, caractérisé en ce que le véhicule comprend deux galets propulseurs (5) dont l'orientation par rapport à l'axe des tubes (13) est commandée par un seul moteur pas-à-pas (37), par l'intermédiaire d'une liaison en forme d'un parallélogramme déformable (49).

6. Système selon l'une des revendications précédentes, caractérisé en ce qu'il comprend un poste central de commande adapté pour dialoguer avec un dispositif émetteur-récepteur embarqué sur chaque véhicule et la voie (1) est cantonnée en secteurs à chacun desquels est attribuée une vitesse de consigne en fonction de la topographie du secteur de voie et, le cas échéant, de la situation par rapport au véhicule précédent.

7. Système selon la revendication 6, caractérisé en ce que chaque secteur comprend une bouche émettrice-réceptrice de contrôle et de régulation reliée au poste central et destinée à assurer le dialogue avec le dispositif émetteur-récepteur des véhicules.

8. Système selon la revendication 7, caractérisé en ce que le poste central est adapté pour calculer pour chaque véhicule l'instant de temps de passage par chaque tronçon de voie et de vérifier le déplacement normal des véhicules par comparaison du temps de passage calculé au temps de passage réel signalé par le dispositif émetteur-récepteur du véhicule à vérifier.

9. Système selon l'une des revendications 6 à 8, caractérisé en ce que chaque véhicule est adapté pour recevoir une consigne de vitesses pour chaque secteur suivant, cette valeur étant accompagnée d'une variable indiquant le type de courbes de variation d'accélération à respecter.

10. Système selon la revendication 9, caractérisé en ce que deux courbes de variation sont mémorisées pour chaque une courbe d'accélération et décélération standard, notamment en fonction de la topographie ou de la géométrie de la voie dans ce secteur, et une courbe de décélération d'urgence.

11. Système selon la revendication 10, caractérisé en ce que, en cas d'une anomalie telle qu'une panne, le véhicule se met en sécurité prévoyant un arrêt d'urgence du véhicule et en ce qu'un fonctionnement en mode dégradé est prévu pour le véhicule suivant assurant l'accouplement de celui-ci au véhicule en panne et le déplacement en commun des deux véhicules à une vitesse réduite jusqu'à la prochaine station d'arrêt normale.

12. Système selon l'une des revendications précédentes, caractérisé en ce que les galets propulseurs (5) sont adaptés pour revenir en une position perpendiculaire aux tubes, automatiquement, dès l'arrêt du fonctionnement du moteur pas-à-pas (37), ce dernier étant adapté pour impartir l'orientation des galets et de maintenir ceux-ci dans cette position.

## Claims

1. System for the transport by passive vehicles, of the type in which the vehicles are moving with the assistance of wheels (4) on rollways (7) of a track (1) comprising as means ensuring the displacement of the vehicle, a series of rotary tubes (13) arranged in the longitudinal direction of the track (1) and means for the guiding of the vehicles along the latter, each vehicle (2) comprising at least one propulsion device (5) comprising a drive roller (30) for the propulsion of the vehicle through frictional contact with the external peripheral surface of the rotary tubes (13) and the axis of rotation of which is steerable with respect to the axis of the tubes by pivoting about an advantageously substantially vertical axis between a position parallel to the tubes in which the rollers do not propel the vehicle and a position of maximum propulsion and at least one device (6) for the guiding of the vehicle, adapted to co-operate with the guide means of the track, characterized in that the guide means of the track (1) are constituted by two side surfaces (9) of a trench (8) covered (at 15) at the level of the track (1) except for a slot, in that the guiding device (6) is lying inside of the trench and comprises wheels (19) bearing upon the guide surfaces (9) and mounted onto an integral support (16), in that a vehicle comprises at least two bogies carrying wheels (4) and in that a guiding device (6) is associated with each bogie (3), in that the supports (16) are pivotally connected to a beam (22) constituting the support of the propulsion devices (5) and in that each support (16) of the guide wheels is connected to the bogies by braces (17) extending through the said slot.

2. System according to claim 1, characterized in that the device (5) for the steering of a propulsion drive roller (30) is constituted by an electric step motor (37).

3. System according to one of claims 1 and 2, characterized in that each propulsion roller (5) is rotatably mounted in a support (32) carrying a rod (33) which extends in perpendicular relation to the axis (31) of the roller and is rotatably mounted in a support (40) mounted onto the connecting beam (22), so that it may carry out a vertical movement only against return means (46) adapted for pushing the roller into contact with the peripheral surface of the rotary tubes (13), the rod (33) being capable of being rotated by the electric step motor (37).

4. System according to claim 3, characterized in that dynamos (52) are mounted onto the axis (31) of the propelling roller (30) which form part of a self-contained device for the feeding of the vehicle with electrical energy.

5. System according to claim 3 or 4, characterized in that the vehicle comprises two propelling rollers (5) the direction of which with respect to the axis of the tubes (13) is controlled by one single step motor (37) through the medium of a connection in the shape of a deformable parallelogram.

6. System according to one of the foregoing claims, characterized in that it comprises a central control station adapted to dialogue with an emitter-receiver device borne on each vehicle and the track (1) is divided into sectors to each one of which is assigned a set speed in accordance with the topography of the track sector and if need be of the situation with respect to the preceding vehicle.

7. System according to claim 6, characterized in that each sector comprises an emitter-receiver control and regulating loop connected to the central station and intended to ensure the dialogue with the emitter-receiver device of the vehicles.

8. System according to claim 7, characterized in that the central station is adapted to calculate for each vehicle the time moment of passage on each track section and to check the normal displacement of the vehicles through comparison of the calculated passage time with the real passage time indicated by the emitter-receiver device of the vehicle to be checked.

9. System according to one of claims 6 to 8, characterized in that each vehicle is adapted to receive an instruction of speeds for each following sector, this value being accompanied by a variable indicating the type of acceleration variation curves to be complied with.

10. System according to claim 9, characterized in that both variation curves are stored for each one of a standard acceleration and deceleration curve in particular in accordance with the topography or with the geometry of the track in this sector and of an emergency deceleration curve.

11. System according to claim 10, characterized in that in case of an anomaly such as a breakdown, the vehicle puts itself in the safety mode providing an emergency stop of the vehicle and in that an operation in the impaired mode is provided for the next vehicle ensuring the coupling of the latter to the broken down vehicle and the common displacement of both vehicles at a reduced speed to the next normal stop station.

12. System according to one of the foregoing claims, characterized in that the propelling rollers (5) are adapted to return automatically to a position perpendicular to the tubes from the stop of the operation of the step motor (37), the latter being adapted to impart the direction of the rollers and to hold the latter in this position.

## Patentansprüche

1. System zum Transport durch passive Fahrzeuge, derjenigen Gattung, bei welcher die Fahrzeuge sich mit Hilfe von Rädern (4) auf Rollwegen (7) einer Bahn (1) bewegen, welches als die Fahrbewegung des Fahrzeuges gewährleistende Mittel, eine Reihenfolge von in der Längsrichtung der Bahn (1) angeordneten Drehrohren (13) und Mittel zur Führung der Fahrzeuge entlang dieser letzteren aufweist, wobei jedes Fahrzeug (2) wenigstens eine eine Rolle (30) zum Fahrantrieb des Fahrzeuges durch Reibungsberührung mit der äußeren Umfangsfläche der Drehrohre (13), dessen Drehachse in bezug auf die Achse der Rohre durch Schwenken um eine vorteilhaft etwa senkrechte Achse zwischen einer mit den Rohren gleichgerichteten Stellung, in welcher die Rollen das Fahrzeug nicht zum Fahren antreiben und eine maximale Fahrantriebstellung richtungseinstellbar ist und wenigstens eine zur Zusammenwirkung mit den Führungsmitteln der Bahn angepaßte Vorrichtung (6) zur Führung des Fahrzeuges aufweist, dadurch gekennzeichnet, daß die Führungsmittel der Bahn (1) durch zwei Seitenflächen (9) eines mit Ausnahme eines Schlitzes in der Höhe der Bahn (1) (bei 15) abgedeckten Einschnitts (8) gebildet werden, daß die Führungsvorrichtung (6) sich innerhalb des Einschnitts befindet und sich an den Führungsflächen (9) abstützende und an einem fest verbundenen Träger (16) angeordnete Räder (19) aufweist, daß ein Fahrzeug wenigstens zwei Räder (4) tragende Fahrgestelle umfaßt und daß eine Führungsvorrichtung (6) jedem Fahrgestell (3) zugeordnet ist, daß die Träger (16) an einem die Halterung der Fahrantriebsvorrichtungen bildenden Balken (22) angelenkt sind und daß jeder Träger (16) der Führungsräder mit den Fahrgestellen durch den besagten Schlitz durchsetzende Stege (17) verbunden ist.

2. System nach Anspruch 1, dadurch gekennzeichnet, daß die Vorrichtung (5) zur Ausrichtung einer Fahrantriebsrolle (30) durch einen elektrischen Schrittschaltmotor (37) gebildet wird.

3. System nach einem der Ansprüche 1 und 2, dadurch gekennzeichnet, daß jede Fahrantriebsrolle (5) in einem eine Stange (33) tragenden Halter (32) drehbar gelagert ist, welche Stange sich senkrecht zur Achse (31) der Rolle erstreckt und in einem an dem Verbindungsbalken (22) angeordneten Halter (40) drehbar gelagert ist, um nur eine senkrechte Bewegung entgegen zum Inberührungbringen der Rolle mit der Umfangsfläche der Drehrohre (13) durch Schieben angepaßten Rückstellmitteln (46) durchführen zu können, wobei die Stange (33) fähig ist, durch den elektrischen Schrittschaltmotor (37) zum Drehen angetrieben zu werden.

4. System nach Anspruch 3, dadurch gekennzeichnet, daß Dynamomaschinen (52) an der Achse (31) der Fahrantriebsrolle (30), die einen Teil einer Vorrichtung zur selbsttätigen Speisung des Fahrzeuges mit elektrischer Energie bilden, angeordnet sind.

5. System nach Anspruch 3 oder 4, dadurch gekennzeichnet, daß das Fahrzeug zwei Fahrantriebsrollen (5) umfaßt, deren Ausrichtung in bezug auf die Achse der Rohre (13) durch einen einzigen Schrittschaltmotor (37) über eine Verbindung in der Gestalt eines verformbaren Parallelogrammes (49) gesteuert wird.

6. System nach einem der vorangehenden Ansprüche, dadurch gekennzeichnet, daß es einen zum Dialog mit einer sich in jedem Fahrzeug befindenden Sender-Emfänger-Vorrichtung angepaßten Zentralsteuerstand umfaßt und die Bahn (1) in Sektoren unterteilt ist, wobei jedem Sektor eine Sollgeschwindigkeit in Abhängigkeit von der Topographie des Bahnsektors und gegebenenfalls von der Lage in bezug auf das vorangehende Fahrzeug zugeteilt ist.

7. System nach Anspruch 6, dadurch gekennzeichnet, daß jeder Sektor eine mit dem Zentralstand verbundene Sendungs-Empfangsschleife zur Kontrolle und Regelung umfaßt, die bestimmt ist, den Dialog mit der Sender-Empfängervorrichtung der Fahrzeuge zu gewährleisten.

8. System nach Anspruch 7, dadurch gekennzeichnet, daß der Zentralstand angepaßt ist, um für jedes Fahrzeug, den Zeitpunkt der Durchfahrt jedes Bahnabschnitts zu berechnen und die normale Bewegung der Fahrzeuge durch Vergleich der berechneten Durchfahrtzeit mit der durch die Sender-Empfängervorrichtung des nachzuprüfenden Fahrzeuges gemeldeten tatsächlichen Durchfahrtzeit zu überprüfen.

9. System nach einem der Ansprüche 6 bis 8, dadurch gekennzeichnet, daß jedes Fahrzeug angepaßt ist, um einen Geschwindigkeitssollwert für jeden nachfolgenden Sektor aufzunehmen, wobei dieser Wert von einer die Gattung von einzuhaltenden Beschleunigungsänderungskurven angebenden Veränderlichen begleitet ist.

10. System nach Anspruch 9, dadurch gekennzeichnet, daß die beiden Änderungskurven für jede Kurve einer Standartbeschleunigungs- und verzögerungskurve insbesondere in Abhängikeit von der Topographie oder der Geometrie der Bann in diesem Sektor und einer Notverzögerungskurve gespeichert werden.

11. System gemäß Anspruch 10, dadurch gekennzeichnet, daß im Falle einer Anomalie wie eines Versagens, das Fahrzeug sich in einen ein Notanhalten des Fahrzeuges vorsehenden Sicherheitszustand versetzt und daß eine Betriebsweise im verdorbenen Vorgang für das nachfolgende Fahrzeug vorgesehen ist, die die Ankupplung des letzteren an das ausgefallene Fahrzeug und die gemeinsame Fahrtbewegung der beiden Fahrzeuge bei einer verringerten Geschwindigkeit bis zur nächsten normalen Haltestelle gewährleistet.

12. System nach einem der vorangehenden Ansprüche, dadurch gekennzeichnet, daß die Fahrantriebsrollen (5) angepaßt sind, um selbsttätig in eine zu den Rohren senkrechte Stellung automatisch zurückzukommen, sobald der Betrieb des Schrittschaltmotors (37) ausgeschaltet worden ist, wobei dieser Motor angepaßt ist, um die Ausrichtung der Rollen zu betätigen und diese in dieser Stellung zu halten.
